# EUROPEAN PATENT SPECIFICATION

(11) **EP 2 169 396 B1**
(45) Date of publication and mention of the grant of the patent: **12.11.2014**
(21) Application number: 09290678.3
(22) Date of filing: 07.09.2009
(51) Int. Cl.: G01N 27/48, G01N 33/18

(54) **Electrochemical method for detecting boron in water**
Elektrochemisches Verfahren zur Erkennung von Bor in Wasser
Procédé électrochimique pour la détection de la présence de bore dans l'eau

(30) Priority: 25.09.2008 FR 0856462
(43) Date of publication of application: 31.03.2010
(73) Proprietor: EMD Millipore Corporation, Billerica, MA 01821 (US)
(72) Inventor: Le Ninivin, Céline, 78480 Verneuil sur Seine (FR); Dimitrakopoulos, Aristotelis, 28130 Saint Martin de Nigelles (FR); Rajagopalan, Pascal, 93600 Aulnay-sous-Bois (FR); Vanheghe, Antony, 92600 Asnieres sur Seine (FR)
(74) Representative: Santarelli

(56) References cited:
- EP-A- 0 969 281
- US-A- 5 378 343
- US-B1- 6 682 647
- SAHIN I ET AL: "Voltammetric determination of boron by using Alizarin Red S" ANALYTICA CHIMICA ACTA, ELSEVIER, AMSTERDAM, NL, vol. 572, no. 2, 21 July 2006 (2006-07-21), pages 253-258, XP025047958 ISSN: 0003-2670 [retrieved on 2006-07-21]
- HUTTON E A ET AL: "Bismuth film microelectrode for direct voltammetric measurement of trace cobalt and nickel in some simulated and real body fluid samples" ANALYTICA CHIMICA ACTA, ELSEVIER, AMSTERDAM, NL, vol. 557, no. 1-2, 31 January 2006 (2006-01-31), pages 57-63, XP025047373 ISSN: 0003-2670 [retrieved on 2006-01-31]
- C.E. BANKS, M.E. HYDE, P. TOMCIK, R. JACOBS, R.G. COMPTON: "Cadmium detection via boron-doped diamond electrodes: surfactant inhibited stripping voltammetry" TALANTA, vol. 62, 2004, pages 279-286, XP002524959
- P. SALAÜN, B. PLANER-FRIEDRISCH, C.M.G. VAN DEN BERG: "Inorganic arsenic speciation in water and seawater by anodic stripping voltammetry with a gold microelectrode" ANALYTICA CHIMICA ACTA, vol. 585, 10 January 2007 (2007-01-10), pages 312-322, XP002524960
- T. TANAKA, K. NISHU, H. NABEKAWA, H. HAYASHI: "Determination of thace boron in iron and steel by adsorptive stripping voltammetry using beryllon III" ISIJ INTERNATIONAL, vol. 46, 2006, pages 1318-1323, XP002524961

## Description

The present Patent Application relates to the electrochemical detection of boron, most often in very low doses, or even in the state of traces (i.e. generally a few units to a few hundred ppb - parts per billion-, by weight) in liquid, generally water.

Generally, the detection of boron in a liquid which is generally aqueous, most often water, can be carried out using numerous techniques, most often by electrochemical methods such as polarography.

Boron is a substance which is particularly difficult to detect in that it must be detected when present in very small quantities in water, and, above all, in that it is necessarily detected as a complex with a complexing agent.

Thus the publication "Voltammetric determination of boron by using Alizarin Red S" (Analytica Chimica Acta 572 (2006) 253-258**)** describes a novel voltammetric method for determining the presence of boron in water in the trace state, i.e. most often at a level of a few ppb. In this publication, the complexes of boron with Alizarin Red S (ARS) are detected in a buffer solution using a work electrode, which is a hanging mercury drop electrode, by the presence of an anodic peak.

However, apart from the fact that mercury is a substance which is difficult to handle and can present problems as regards safety and the environment, the use of mercury as a work electrode material is tricky, and the equipment is relatively bulky. Consequently, this method can prove complex to implement, and inflexible to use.

The present Patent Application aims to remedy the drawbacks of the prior art, and in particular the difficulty of implementing a measurement method which does not have the drawbacks of the prior art.

To this end, the invention relates to a method for detecting the presence of boron in water comprising the production of a conductive buffer solution comprising water and at least one boron complexing agent, the introduction into an electrochemical cell of said solution in the presence of at least one work electrode, and the measurement of an anodic peak of the boron complex and complexing agent by voltammetry, said method being
**characterized in that** the work electrode is a solid microelectrode, and in that the measurement is carried out continuously with respect to the flow of water.

Advantageously, the use of such a microelectrode makes it possible to have a measurement method with low environmental toxicity.

On the other hand, the fact of using a solid microelectrode makes it possible to have a method which is easy to carry out by means of particularly compact and inexpensive apparatus.

The use according to the invention of a continuous measurement, in line with respect to the flow of the water in which the presence of boron is measured, is particularly advantageous.

Preferably, the voltammetry measurement is a Differential Pulse Voltammetry (DPV), or a Square Wave Absorptive Stripping Voltammetry Method (SWASVM), or an Absorptive Stripping Voltammetry Method (ASVM) Measurement.

The anodic peak measurement is carried out in the presence of a conductive buffer solution, in general at a given pH. For example, the measurement of anodic peak is carried out according to the following parameters: the conductive buffer solution, for example, comprises an acetate and/or phosphate solution, and the pH can be chosen at 7.4. But any other combination of parameters can also be envisaged by a person skilled in the art, who can use any buffer solution and any appropriate pH. The pH generally depends on various parameters including the concentration and nature of the electrolyte, and its choice must make it possible to optimize the detection of the appearance peak of boron.

Preferably, the boron complexing agent is at a concentration of 10⁻⁹ M to 10⁻³ M, preferably 10⁻⁸ M to 10⁻⁴ M.

For example in the case of the use of the method according to the invention within the context of a water treatment process, typically downstream of a stage of deionization on a resin bed, not only is the detection method according to the invention perfectly integrated into the treatment process, without slowing it down, but it also makes it possible to have an indication of the depletion of the resin, by detection of the presence of boron.

According to the invention, the boron complexing agent is generally chosen from the group formed by the Alizarin Red S (or ARS, (3,4-dihydroxy-9,10-dioxo)-2-anthracenesulphonic) acid sodium salt) and beryllium (III). But any other complexing agent can also be envisaged by a person skilled in the art within the scope of the invention.

The work microelectrode according to the invention is generally chosen from carbon microelectrodes (i.e. generally vitreous carbon microelectrodes or carbon nanotubes), bismuth microelectrodes (i.e. generally microelectrodes made of bismuth, or microelectrodes coated with a bismuth film), diamond microelectrodes, doped or not doped with boron, and microelectrodes coated with a mercury film, for example. But any other microelectrode can also be envisaged by a person skilled in the art within the scope of the invention. The person skilled in the art is able to choose the parameters defining the work microelectrode, such as the material or materials which form it and its geometry, according to the conditions of implementation.

Advantageously according to the invention, it is possible to calibrate the boron concentration measurement as a function of the anodic peak height. This is conventionally done with a passing through the apparatus of a "blank" solution, i.e. a solution without boron and with the passing through of at least one solution of water, containing boron, at a known concentration of boron.

According to such a calibration, the boron is generally able to be detected at a concentration of at least 5 ppb, generally from 5 to 1000 ppb, preferably from 5 to 400 ppb.

The invention also relates to a detection device for the implementation of a method as described previously. Such a device is **characterized in that** said device comprises at least one electrochemical cell comprising a liquid inlet means and a separate liquid outlet means, the cell comprises moreover a cell tightness means and a reference electrode, a counter electrode and a work microelectrode, said work microelectrode being able to be introduced in the electrochemical cell in the presence of a conductive buffer solution comprising water and at least one boron complexing agent, and said work mini-electrode being chosen from the carbon microelectrodes, bismuth microelectrodes, boron-doped or non-doped diamond microelectrodes, and microelectrodes coated with a mercury film, said device being able to measure an anodic peak of the boron complex and complexing agent by voltammetry, and to carry out this measurement continuously with respect to the flow of water.

Particularly preferably the three electrodes are microelectrodes.

The device according to the invention also comprises, preferably, a means of processing the signal picked up by the work electrode, said processing means preferably comprising a means for measuring the boron concentration of the liquid present in the cell. Generally such means comprise electronic and/or computer means which allow the storage of the calibration, comparison with the calibration and retransmission of the measurement information.

The device according to the invention can be integrated within a water purification system or be used in an autonomous "stand alone" type module, i.e. generally with no link to the outside and self-sufficient (being able to operate without any outside action or information).

The invention will be better understood on reading the following figures, among which;
Figure 1 diagrammatically shows a first boron detection device according to the invention, in an exploded view from above;
Figure 2 diagrammatically shows said first device, in an exploded view from below;
Figure 3 diagrammatically shows said first assembled device, the electrodes being arranged inside the electrochemical cell;
Figure 4 represents said first assembled device of Figure 3 from which the microelectrodes have been removed;
Figure 5 diagrammatically shows a second boron detection device according to the invention, in an exploded view from above;
Figure 6 diagrammatically shows said second device, in an exploded view from below;
Figure 7 diagrammatically shows said second assembled device, the microelectrodes being arranged inside the electrochemical cell;
Figure 8 shows voltammetry measurements according to an example of the implementation of the invention; and
Figure 9 shows a calibration curve according to an example of the implementation of the invention.

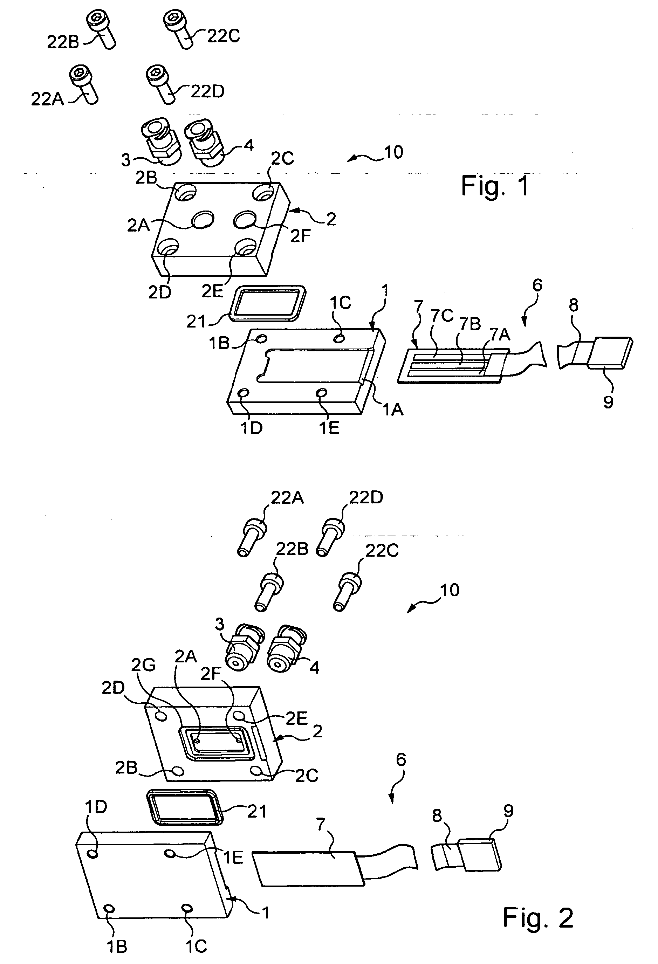

The first device 10 for the detection of boron according to the invention is as it is represented in Figures 1 to 4. The device 10 comprises a cell defined by a base 1 and a cover 2, each comprising a hollow part, and intended to be arranged opposite each other, the assembly of their hollow parts complementing one another and defining the actual cell, i.e. the space in which an electrolyte comprising water and boron complexing agent will be present, and with which the three electrodes (the reference electrode, the work electrode and the counter electrode) will be brought into contact for the electrochemical measurements, in this case voltammetry. The assembly of the parts 1 and 2, once closed, form this cell, the gasket 21 ensuring the tightness of the cell.

The cover 2 and the base 1 each comprise threaded openings for fixing the assembly of these two parts by screwing respectively the openings 1B, 1C, 1D, 1E of the base 1 and 2B, 2C, 2D, 2E of the cover 2, assembled by the screws 22B, 22C, 22A, 22D, said assembly producing the electrochemical cell.

The cover 2 comprises two liquid inlet 2A and outlet 2F orifices respectively on which end pieces 3 and 4 are placed respectively and partially, allowing the passage of liquid and ensuring tightness. The ends of the end pieces 3 and 4 which are not immobilized in the wall of the cover 2 are intended to receive flexible pipes with positive locking for the flow of liquid.

The device 10 comprises a plate 7 generally constituted by a support most often made of ceramic, plastic of PDMS (polydimethylsiloxane) type or a silicon wafer type substrate, to which are cemented the three electrodes which are according to the invention microelectrodes 7A, 7B and 7C, namely the reference electrode, the work electrode and the counter electrode. The nature of these electrodes is in general chosen by a person skilled in the art according to the electrolytic medium and other usual parameters.

According to the invention, other types of support plates can be envisaged, for example support plates made of plastic of PTFE (PolyTetraFluoroEthylene), PVDF (Poly Vinylidene Fluoride) or PE (PolyEthylene) type, but also support plates made of other material(s) such as quartz or even stainless steel (insulated). Similarly the geometry of the microelectrodes, in this case in the form of a thin rectangular plate, can be different, for example circular or spiral in shape instead of rectangular. Generally, the person skilled in the art is able to adapt the device used according to the conditions of implementation without exceeding the scope of the invention.

The plate 7 can be inserted into or removed from the device 10 at will, by a simple translation movement, this possibility of movement advantageously giving flexibility of use of said device. The plate 7 is in contact, in particular via the three microelectrodes, with a flexible part 8, of chosen length, which transmits the three electric signals to a rigid plate 9 which allows connection to any electric or electronic detection or even measurement device. The assembly of the support plate 7 and the three microelectrodes, the flexible part 8 and the connection plate 9 constitutes a detachable part of the device 10.

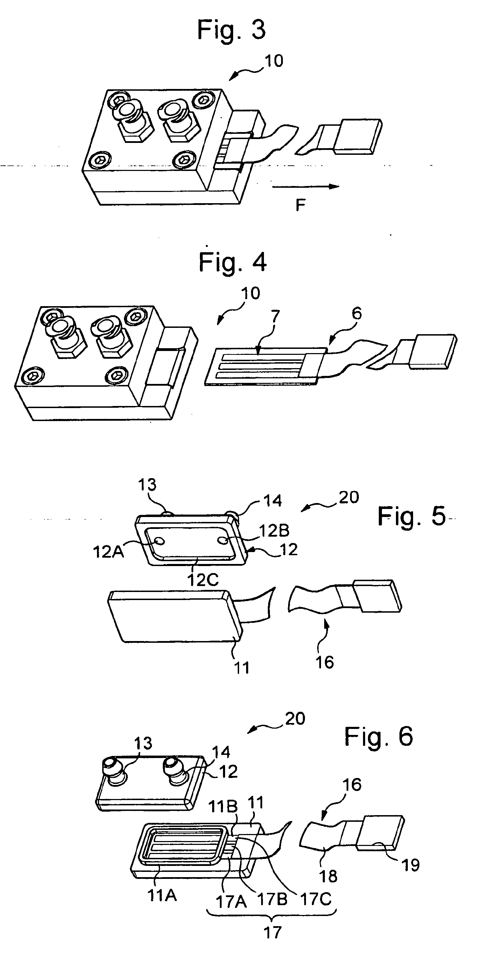

In Figure 3, the first device 10 is shown assembled, in compact form, the microelectrodes being present inside the electrochemical cell. As shown, the device 10 can be used for any detection measurement. The arrow F indicates the direction in which it is possible to move the assembly 7 of the electrodes on a support, without damaging them, by holding and moving the support plate, to release them. Figure 4 shows the assembled device once the microelectrodes have been removed from the cell. Thus the assembly of the microelectrodes can be moved at will, inside or outside the cell, for example for maintenance or for use on another cell of the same type.

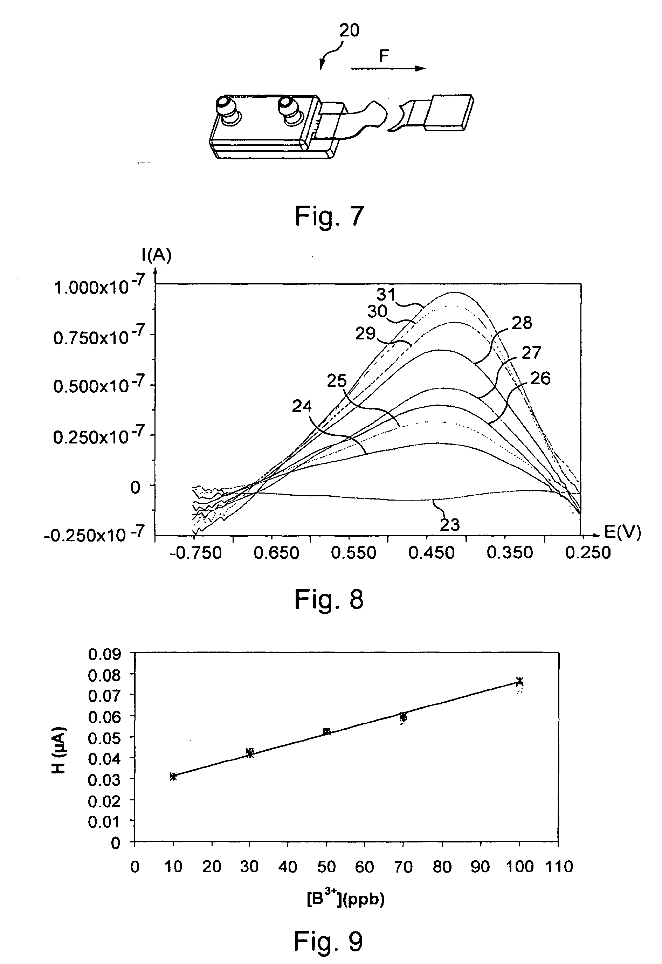

Figures 5, 6 and 7 show a second boron detection device 20 according to the invention, which is shown assembled in Figure 7. The second device 20 is a variant of the first device 10, and the parts of the device 20 are of the same kind as the device 10, unless otherwise specified. The device 20 comprises a cover 12 comprising two orifices 12A and 12B, and delimiting an upper cell part 12C, a base 11 into which a set 16 of electrodes can be inserted. The assembly 16 comprises a support plate 17 on which the microelectrodes 17A, 17B and 17C are fixed, for example by cementing. The assembly 16 also comprises a flexible part 18 which is suitable for conducting the signals from the microelectrodes to a electrical connection plate 19. The liquid inlet and outlet parts fixed with positive locking to the cover 12 are respectively the end pieces 13 and 14.

The elements for fixing the cover 12 onto the base 11 are not shown here. These are for example welding or cementing means.

In Figure 7, the arrow F indicates the direction and manner in which it is possible to move the assembly of microelectrodes 17A, 17B and 17C without damaging them, by holding and moving the support plate, to release them from this device 20.

### Example

The invention was implemented according to an illustrative, and non-limitative example, for measuring boron in water by the second device 20 according to the invention, the mixture of the water to be measured and the elements of electrolytic solution (buffer, boron complexing agent) being carried out in line in a liquid access pipe section, for example in the form of a coil. Figures 8 and 9 show the results obtained, Figure 8 showing voltammetry curves measured according to this example, and Figure 9 showing a calibration curve measured according to this example.

The device 20 as shown in Figures 5 to 7 was used according to the DPV ("Differential Pulse Voltammetry") technique. The voltage of the peak appearance was -0.37 V.

The work microelectrode is made of bismuth, more precisely of carbon coated with a bismuth film. The support plate is made of PDMS. The reference electrode is made of Hg/HgCl paste, and the counter electrode is made of carbon.

The calibration curve measured is given in Figure 9; it indicates along the y-axis the height H of the anodic peak (in microamperes, µA), and along the x-axis the concentration C of boron B³⁺ ions (in ppb). This calibration curve was obtained by the different measurements of Figure 8.

Figure 8 shows the different measurements which have produced the calibration curve of Figure 9, the intensity i of the anodic peak being indicated along the y-axis (in Amperes, A) and the voltage E being indicated along the x-axis (in Volts, V). Different voltammograms are shown, on the basis of a different voltammogram for each electrolytic solution tested. The curve 23 represents a "blank" voltammogram, i.e. comprising 10⁻⁶ M of ARS and 0.1M of ammonium acetate and ammonium phosphate, without boron. The curve 24 represents the same solution but comprising in addition 10 ppb of boron. Similarly, the curves 25 to 31 represent respectively measurements for 30 ppb of boron, 50 ppb of boron, 70 ppb of boron, 100 ppb of boron, 200 ppb of boron, 300 ppb of boron and 400 ppb of boron.

The measurements were carried out with a 0.1 M acetate buffer and 0.1M phosphate buffer and at a pH of 7.4. The accumulation voltage is E = -0.70V over 120 seconds with stirring, the amplitude is 50 mV and the step is 4 mV.

The method and the device according to the invention thus illustrated exhibit a certain advantage in the detection of boron by a reliable, non-toxic, safe measurement method which can be used very effectively in line.

## Claims

1. Method for detecting the presence of boron in water integrated into a water treatment process comprising the production of a conductive buffer solution comprising the water comprising boron to be detected and at least one boron complexing agent, the continuous introduction into an electrochemical cell of said solution in the presence of at least one work electrode (7), and the measurement of an anodic peak of the boron complex and complexing agent by voltammetry, the height of the anodic peak being related via a calibration curve, to the concentration of boron, said method being **characterized in that** the work electrode (7) is a solid microelectrode, and **in that** the measurement is carried out continuously with respect to the flow of solution.

2. Method according to the preceding claim such that the voltammetry measurement is a Differential Pulse Voltammetry (DPV), or a Square Wave Absorptive Stripping Voltammetry Method (SWASVM), or an Absorptive Stripping Voltammetry Method (ASVM) measurement.

3. Method according to any one of the preceding claims such that the boron complexing agent is at a concentration of 10⁻⁹ M to 10⁻³ M, preferably 10⁻⁸ M to 10⁻⁴ M.

4. Method according to any one of the preceding claims such that the boron complexing agent chosen from the group formed by Alizarin Red S (or ARS, (3,4-dihydroxy-9,10-dioxo)-2-anthracenesulphonic) acid sodium salt) and beryllium (III).

5. Method according to any one of the preceding claims such that the work microelectrode (7) is chosen from carbon microelectrodes, bismuth microelectrodes, boron-doped or non-doped diamond microelectrodes, and microelectrodes coated with a mercury film.

6. Method according to any one of the preceding claims such that the boron concentration measurement is calibrated as a function of the anodic peak height with a solution without boron and with at least one solution at a known concentration of boron.

7. Method according to the preceding claim such that, after calibration, the boron is able to be detected at a concentration of at least 5 ppb, generally from 5 to 1000 ppb, preferably from 5 to 400 ppb.

8. Method according to the preceding claims wherein it is carried out downstream of a stage of deionization on a resin bed.

## Patentansprüche

1. Verfahren zum Nachweis der Anwesenheit von Bor in Wasser im Rahmen eines Wasseraufbereitungsprozesses, umfassend das Herstellen einer leitfähigen Pufferlösung, welche das Wasser, das nachzuweisendes Bor enthält, und mindestens ein Borkomplexierungsmittel umfasst, das kontinuierliche Einbringen der Lösung in eine elektrochemische Zelle in Anwesenheit mindestens einer Arbeitselektrode (7), sowie das Messen eines anodischen Peaks des Borkomplexes und des Komplexierungsmittels mittels Voltammetrie, wobei die Höhe des anodischen Peaks über eine Kalibrationskurve mit der Borkonzentration in Beziehung gesetzt wird, wobei das Verfahren **dadurch gekennzeichnet ist, dass** die Arbeitselektrode (7) eine Feststoffmikroelektrode ist, und dass das Messen, was den Lösungsfluss anbelangt, kontinuierlich durchgeführt wird.

2. Verfahren nach dem vorhergehenden Anspruch, wobei die voltammetrische Messung eine Messung mittels differenzieller Pulsvoltammetrie (DPV), oder mittels eines Square Wave-Absorptions-Stripping-Voltammetrieverfahrens (SWASVM), oder mittels eines Absorptions-Stripping-Voltammetrieverfahrens (ASVM) ist.

3. Verfahren nach einem der vorhergehenden Ansprüche, wobei das Borkomplexierungsmittel in einer Konzentration von 10⁻⁹ M bis 10⁻³ M, bejrorzugt von 10⁻⁸ M bis 10⁻⁴ M vorliegt.

4. Verfahren nach einem der vorhergehenden Ansprüche, wobei das Borkomplexierungsmittel aus der aus Alizarinrot S (oder ARS, (3,4-Dihydroxy-9,10-dioxo)-2-anthracensulfonsäure-Natriumsalz) und Beryllium (III) gebildeten Gruppe ausgewählt ist.

5. Verfahren nach einem der vorhergehenden Ansprüche, wobei die Arbeitsmikroelektrode (7) aus Kohlenstoffmikroelektroden, Bismutmikroelektroden, bordotierten oder undotierten Diamantmikroelektroden, und Mikroelektroden, welche mit einer Quecksilberschicht überzogen sind, ausgewählt ist.

6. Verfahren nach einem der vorhergehenden Ansprüche, wobei die Borkonzentrationsmessung in Abhängigkeit von der Höhe des anodischen Peaks mit einer Lösung, welche kein Bor enthält, sowie mit mindestens einer Lösung mit bekannter Borkonzentration kalibriert wird.

7. Verfahren nach dem vorhergehenden Anspruch, wobei das Bor nach Kalibrierung bei einer Konzentration von mindestens 5 ppb, allgemein von 5 bis 1000 ppb, bevorzugt von 5 bis 400 ppb, nachgewiesen werden kann.

8. Verfahren nach den vorhergehenden Ansprüchen, welches auf einem Harzbett, das einer Entionisierungsstufe nachgeordnet ist, durchgeführt wird.

## Revendications

1. Méthode de détection de la présence de bore dans de l'eau comprenant la réalisation d'une solution conductrice tampon comprenant l'eau comprenant le bore à détecter et au moins un complexant du bore, l'introduction en continu dans une cellule électrochimique de ladite solution en présence d'au moins une électrode de travail (7), et la mesure d'un pic anodique du complexe de bore et de complexant par voltamétrie, la hauteur du pic anodique étant reliée, par une courbe de calibration, à la concentration en bore, ladite méthode étant **caractérisée en ce que** l'électrode de travail (7) est une micro électrode solide, et **en ce que** la mesure est réalisée en continu par rapport au flux de la solution.

2. Méthode selon la revendication précédente telle que la mesure de voltamétrie est une mesure de voltamétrie à impulsion différentielle (ou DPV), ou de voltamétrie d'absorption à balayage à onde rectangulaire (ou SWASVM), ou de voltamétrie d'absorption à balayage (ou ASVM).

3. Méthode selon l'une des revendications précédentes telle que le complexant du bore est à concentration de 10⁻⁹ M à 10⁻³ M, de préférence de 10⁻⁸ M à 10⁻⁴ .

4. Méthode selon l'une des revendications précédentes telle que le complexant du bore choisi dans le groupe formé par l'alizarine rouge S (ou ARS, sel de sodium d'acide (3,4-dihydroxy-9,10-dioxo)-2-anthracènesulfonique) et le béryllium (III).

5. Méthode selon l'une des revendications précédentes telle que la micro électrode de travail (7) est choisie parmi les microélectrodes de carbone, les microélectrodes de bismuth, les microélectrodes en diamant, dopées ou non au bore, et les microélectrodes revêtues de film de mercure.

6. Méthode selon l'une des revendications précédentes telle que l'on procède à une calibration de la mesure de la concentration de bore en fonction de la hauteur de pic anodique, avec une solution sans bore et avec au moins une solution à concentration connue en bore.

7. Méthode selon la revendication précédente telle que, après calibration, le bore est susceptible d'être détecté à une concentration d'au moins 5 ppb, généralement de 5 à 1000 ppb, de façon préférée de 5 à 400 ppb.

8. Méthode selon les revendications précédentes, telle qu'elle est mise en oeuvre en aval d'une étape de désionisation sur lit de résine.
